# EUROPÄISCHE PATENTANMELDUNG

(11) **EP 4 431 832 A1**
(43) Veröffentlichungstag der Anmeldung: **18.09.2024**
(21) Anmeldenummer: 24156376.6
(22) Anmeldetag: 07.02.2024
(51) Int. Cl.: F24S 10/30, F24S 20/67, F24S 50/40, F24S 90/00, H02S 40/42, H02S 40/44

(54) **SYSTEM UND VERFAHREN ZUR GEZIELTEN GLEICHZEITIGEN NUTZUNG VON SONNENSTRAHLUNG ZUR STROMERZEUGUNG UND HEIZEN EINES FLÜSSIGKEITSKREISLAUFS**

(30) Priorität: 15.03.2023 DE 102023001003; 31.05.2023 DE 102023114194; 07.07.2023 EP 23184082
(71) Anmelder: SolteQ GmbH, 49779 Oberlangen (DE)
(72) Erfinder: Die Erfindernennung liegt noch nicht vor
(74) Vertreter: Raffay & Fleck

(57) **Zusammenfassung**

Die Erfindung betrifft ein System und Verfahren zur gezielten gleichzeitigen Nutzung von Sonnenstrahlung zur Stromerzeugung und Heizen eines Flüssigkeitskreislaufs sowie die Reduzierung der Erwärmung eines Gebäudes.

Aufgabe der Erfindung ist es insbesondere eine effizientere und einfachere und insbesondere auch örtlich flexiblere Nutzung der Wärmeenergie der erwärmten Luft zu ermöglichen.

Gelöst wird die Aufgabe dadurch, dass mindestens ein Solarzellenmodul, zusammen mit mindestens einem weiteren Element einen Hohlraum auf der Rückseite des mindestens einen Solarzellenmodul ausbildet, wobei in dem Hohlraum Luft angeordnet ist und dass auf das mindestens eine Solarzellenmodul auftreffende Sonnenstrahlung die Luft im Hohlraum unter den Solarziegeln erwärmt. Dabei wird die im Hohlraum erwärmte Luft in Kontakt mit einem Luft-Flüssigkeits-Wärmetauscher gebracht, wobei der Luft-Flüssigkeits-Wärmetauscher Bestandteil eines Flüssigkeitskreislaufs, eingerichtet zur Erwärmung eins Kältemittelkreislaufs, insbesondere einer Wärmepumpe und/oder zur Erwärmung eines Verdampfers, insbesondere einer Wärmepumpe, und/oder eines Pufferspeichers, insbesondere wassergefüllten, Pufferspeicher, ist.

## Beschreibung

Die Erfindung betrifft ein System und Verfahren zur gezielten gleichzeitigen Nutzung von Sonnenstrahlung zur Stromerzeugung und Heizen eines Flüssigkeitskreislaufs sowie die Reduzierung der Erwärmung eines Gebäudes.

Es ist durch Veröffentlichungen der Anmelderin bekannt, in einem Hohlraum zwischen Solarzellen und Unterspannbahn erwärmte Luft abzusaugen und einer ersten Seite eines Wärmetauschers einer Wärmepumpe zuzuführen, dessen andere Seite mit dem Kühlmittel des Kompressorkreislaufs der Wärmepumpe in Kontakt steht. Auch ist es aus der WO 2020/229686 A2 bekannt, die Luft nicht zwischen Solarzelle und Unterspannbahn zu führen, sondern in einem unter der Solarzelle angeordneten Kasten oder Kanal.

Ein Hausdach beinhaltet Wärmeenergie durch die Sonne. Tagsüber wird die Dachfläche durch Sonneneinstrahlung warm. Diese Wärme kann genutzt werden, indem die erwärmte Luft über ein Rohr, welches im First integriert wird, abgesaugt und genutzt werden kann. Diese warme Luft kann einer Wärmepumpe zugeführt werden, die diese dann konzentriert und das Haus heizen kann.

Aufgabe der Erfindung ist es insbesondere eine effizientere und einfachere und insbesondere auch örtlich flexiblere Nutzung der Wärmeenergie der erwärmten Luft zu ermöglichen, insbesondere ohne dabei große Kältemittelmengen zu benötigen und/oder eine im Dachraum platzsparende Umsetzung ermöglicht.

In dieser Erfindung geht es unter anderem um die Komponente Wärmetauscher, die für den Betrieb einer Wärmepumpe notwendig ist, die in den First mit integriert wird. Die unter den Solarschindeln, durch die Sonnenenergie erwärmte, somit wärmeenergiehaltige Luft wird vorteilhafterweise abgesaugt und/oder durch den Wärmetauscher gefördert. Die in die Flüssigkeit überführte und/oder umgewandelte Wärmeenergie kann einfach, platzsparend und wartungsunanfällig über weite Strecken transportiert werden und/oder auf einfache Weise in einem, insbesondere wassergefüllten, Pufferspeicher gespeichert werden. Die Wärme wird bevorzugt zumindest zeitweise in eine Wärmepumpe geleitet.

Dieses Prinzip, insbesondere die Absaugung der thermischen Wärmeenergie über das Firstrohr ist sowohl für Neu-Dächer als auch zur Dach-Sanierung geeignet.

Das Dach, somit auch die Luft unter den Solarschindeln, wird durch die Sonnenwärme aufgeheizt. Jede Schindel ist insbesondere hinterlüftet. Frische Luft wird bevorzugt durch die Schindeln und/oder durch die Traufe eingelassen. Über das bevorzugt eingelassene Firstrohr kann die warme Luft eingesaugt und zur Wärmepumpe geleitet werden.

Gelöst wird die Aufgabe zum Einen durch ein System zur Erzeugung von Strom und Wärme mittels Sonnenstrahlung, wobei mindestens ein Solarzellenmodul, zusammen mit mindestens einem weiteren Element einen Hohlraum auf der Rückseite des mindestens einen Solarzellenmodul ausbildet, wobei in dem Hohlraum Luft angeordnet ist und wobei das System so eingerichtet ist, dass auf das mindestens eine Solarzellenmodul auftreffende Sonnenstrahlung die Luft im Hohlraum erwärmt. Dabei ist das System eingerichtet, die im Hohlraum erwärmte Luft in Kontakt mit einem Luft-Flüssigkeits-Wärmetauscher zu bringen, wobei der der Luft-Flüssigkeits-Wärmetauscher im First eines Dachs, insbesondere Steildachs, und/oder im oberen Bereich eines luftgefüllten und zur Erwär-mung durch Sonnenstrahlung ausgebildeten Hohlraum angeordnet ist und wobei Luft-Flüssigkeits-Wärmetauscher Bestandteil eines Flüssigkeitskreislaufs und/oder einer Wasserleitung ist. Dabei ist die Wasserleitung insbesondere eine zu und/oder zur Anbindung einer Zapfstelle und/oder eine Brauchwasserleitung, insbesondere eingerichtet und/oder angeordnet zur Bereitstellung von Brauch- und/oder Trinkwasser und/oder eine Wasserleitung, die Brauch- und/oder Trinkwasser führt. Insbesondere ist der Flüssigkeitskreislauf eingerichtet und/oder angeordnet zur Erwärmung eines Kältemittelkreislaufs, insbesondere einer Wärmepumpe und/oder zur Erwärmung eines Verdampfers, insbesondere einer Wärmepumpe, und/oder eines Pufferspeichers, insbesondere wassergefüllten Pufferspeicher. Insbesondere weist der Flüssigkeitskreislauf einen weiteren Wärmetauscher, insbesondere Flüssigkeits-Flüssigkeits-Wärmetauscher und/oder Flüssigkeits-GasWärmetauscher, eingerichtet und/oder angeordnet zur Erwärmung eines Kältemittelkreislaufs, insbesondere einer Wärmepumpe und/oder zur Erwärmung eines Verdampfers, insbesondere einer Wärmepumpe, und/oder eines Pufferspeichers, insbesondere wassergefüllten Pufferspeicher, auf. Insbesondere ist der Flüssigkeitskreislauf mit Flüssigkeit gefüllt. Insbesondere beinhaltet das System den Pufferspeicher, den Kältemittelkreislauf, die Wärmepumpe und/oder den Verdampfer und/oder die Wasserleitung und/oder die Zapfstelle.

Gelöst wird die Aufgabe auch durch einen First- und/oder Toprohr-Luft-Flüssigkeits-Wärmetauscher, gebildet durch mindestens ein Rohr, insbesondere eine Vielzahl von miteinander verbundenen Rohren, wobei das mindestens eine Rohre, auch Flüssigkeitsführungsrohr, von Lamellen aus Metall umgeben ist, insbesondere sind die Rohre von Lamellen aus Metall umgeben sind und die Rohre parallel zueinander angeordnet und insbesondere mittels Bögen miteinander strömungstechnisch gekoppelt sind, wobei das mindestens eine Rohr und die Lamellen in einem Sammelrohr oder in einem Verlängerungsrohr zur Verbindung mit und/oder verbunden mit einem Sammelrohr mit derselben Richtung der Längserstreckung wie das Verlängerungs- und/oder Sammelrohr angeordnet sind. Insbesondere ist das Sammelrohr ein Firstrohr und/oder ein Toprohr und/oder ist der First-Luft-Flüssigkeits-Wärmetauscher im First eines Dachs, insbesondere Steildachs, und/oder im oberen Bereich eines luftgefüllten und insbesondere zur Erwärmung durch Sonnenstrahlung ausgebildeten Hohlraum angeordnet. Insbesondere überspannt der First-Luft-Flüssigkeits-Wärmetauscher mindestens 70% des Querschnitts des Verlängerungs- und/oder Sammelrohrs und/oder im Wesentlichen den Querschnitt des Verlängerungs- und/oder Sammelrohrs. Mit besonderem Vorteil weist der Wärmetauscher und/oder der First-Luft-Flüssigkeits-Wärmetauscher einen Ventilator, insbesondere eingerichtet und/oder angeordnet, insbesondere erwärmte und/oder gesammelte, Luft dem Luft-Flüssigkeits-Wärmetauscher zuzuführen und/oder durch ihn hindurchzuführen. Das Sammelrohr weist vorteilhafterweise eine Vielzahl von Öffnungen in seiner Wandung und/oder mindestens eine, insbesondere mindestens zwei, lang gestreckte Öffnungen in seiner Wandung auf. Die Öffnungen sind insbesondere über die Längserstreckung des Sammelrohrs verteilt angeordnet. Dabei ist das mindestens eine Rohr vorteilhafterweise in einem, insbesondere endständigen, Abschnitt des Verlängerungs- und/oder Sammelrohrs ohne Öffnungen in der Wandung angeordnet, in dem insbesondere auch der Ventilator angeordnet ist. Insbesondere ist der Abschnitt ohne Öffnungen der Wandung kürzer als ein drittel der Länge des Sammelrohrs. Insbesondere sind Verlängerungs- und Sammelrohr koaxial und/oder unmittelbar aneinander angrenzend und/oder beide als Firstrohr angeordnet und/oder weisen sie den selben Querschnitt auf und/oder ist die Querschnittsfläche des Abschnitts und/oder des Verlängerungsrohrs größer ausgebildet als das Sammelrohr bzw. sein Bereich mit Öffnung(en) in der Wandung.

Gelöst wird die Aufgabe auch durch Verfahren zur gemeinsamen Erzeugung von elektrischem Strom und erwärmter Flüssigkeit, insbesondere Wasser, mittels Sonneneinstrahlung auf eine Fläche mittels mindestens einem die Fläche ausbildenden Solarzellenmodul und, insbesondere gleichzeitiger, Erwärmung von Luft unterhalb des Solarzellenmoduls durch die Sonneneinstrahlung auf die Fläche und Überführen der in der Luft gespeicherten Wärmeenergie zumindest teilweise in einen mit Flüssigkeit gefüllten Flüssigkeitskreislauf und/oder eine mit Wasser gefüllten Wasserleitung mittels eines Luft-Flüssigkeits-Wärmetauschers. Bevorzugt wird, insbesondere mittels eines weiteren Wärmetauschers im Flüssigkeitskreislauf, ein Wärmespeicher geheizt und/oder ein Kältemittelkreislauf, insbesondere ein Verdampfer einer Wärmepumpe geheizt, wobei die Wärmepumpe eine weitere Flüssigkeit erwärmt und insbesondere mit dem elektrischen Strom des mindestens einen Solarzellenmoduls betrieben wird Bevorzugt wird eine Pumpe im Flüssigkeitskreislauf und/oder der Wasserleitung und/oder zur Zuführung von, insbesondere mittels des Luft-Flüssigkeits-Wärmetauschers erwärmtem, Trink- und/oder Brauchwasser zu einer Zapfstelle mit dem elektrischen Strom des mindestens einen Solarzellenmoduls betrieben. Bevorzugt wird mittels der Wasserleitung und/oder dem Wärmespeicher, insbesondere mittels des Luft-Flüssigkeits-Wärmetauschers erwärmtes, Trink- und/oder Brauchwasser einer Zapfstelle zugeführt.

So kann ein kleiner Kältemittelkreislauf an einem beliebigen Ort verwendet werden und kann die Wärme, beispielsweise vom Dach, der Fassade oder außerhalb des Gebäudes aus dem Luft-Flüssigkeits-Wärmetauscher dem Kältemittelkreislauf zugeführt werden. Dies kann statische Anforderungen reduzieren und die Raumnutzung flexibler halten. Auch kann direkt ein Pufferspeicher und/oder Heizkreislauf erwärmt werden. Zudem kann die Führung der erwärmten Luft erleichtert und/oder verkürzt werden und die Thermik in der Regel besser genutzt werden.

Das mindestens eine Solarzellenmodul sind insbesondere mindestens 20 Solarzellenmodule und/oder mindestens eine Solarschindel.

Der Hohlraum muss und ist vorteilhafterweise nicht vollständig verschlossen, um Luft einströmen lassen zu können, insbesondere auf der Seite der Solarzellenmodule und/oder der Sonneneinstrahlung. Der Hohlraum wird in der Regel und vorteilhafterweise auf der von der Sonneneinstrahlung und/oder dem Solarzellenmodul abgewandten Seite vollständig oder ganz geschlossen, wobei es auf eine vollständige Luftdichtigkeit in der Regel nicht ankommt. Auch an zwei gegenüber liegenden sich zumindest teilweise vertikal erstreckenden Stirnseiten ist er bevorzugt im Wesentlichen ganz oder ganz geschlossen, wobei es auf eine vollständige Luftdichtigkeit in der Regel nicht ankommt. An der unteren Stirnseite und/oder an der der Sonne zugewandten Seite bzw. der Seite, an der das mindestens eine Solarzellenmodul angeordnet ist, weist er bevorzugt Lufteintrittsöffnungen auf. Bevorzugt weist der Hohlraum eine in zwei Raumrichtungen deutlich größere Erstreckung auf als in eine dazu, insbesondere senkrechte, dritte. Insbesondere ist die dritte Richtung in etwa, insbesondere mit weniger als 30° Abweichung, in Richtung der Sonnenstrahlung und/oder in etwa, insbesondere mit weniger als 30° Abweichung, in Richtung senkrecht auf der flächigen Erstreckung des mindestens einen Solarzellenmoduls orientiert. Dies ist für die Erwärmung besonders vorteilhaft. Insbesondere wird dabei die Richtung der Sonneneinstrahlung mittags an einem beliebigen Tag betrachtet. Für die Wärmeerzeugung ist es besonders vorteilhaft, die Richtung der Sonneinstrahlung an einem beliebigen Tag im Winter, insbesondere mittags, zu betrachten.

Der Hohlraum ist insbesondere überwiegend mit Luft gefüllt, insbesondere ist er weitüberwiegend oder vollständig zwischen Dachlattung ausgebildet. Dadurch kann eine besonders effektive und einfach zu realisierende Erwärmung realisiert werden.

Die Erwärmung kann, insbesondere bei nicht transparenten und bevorzugt dunklen, also insbesondere grauen, blauen, roten und/oder besonders bevorzugt schwarzen, Solarzellenmodulen oder deren Solarzellen zumindest teilweise indirekt durch die Solarzellenmodule erfolgen. Aber auch transparente Module sind, insbesondere bei einer dunklen, also insbesondere grau, blau oder schwarzen Rückseite des Hohlraums einsetzbar. Zumindest ein Teil der Erwärmung kann dabei durch Einstrahlung der Sonnenstrahlung auch in den Hohlraum erreicht werden. Dazu weisen die Solarzellenmodule insbesondere in einem nicht zur Stromerzeugung genutzten Spektralbereich eine höhere Transparenz auf als in einem zur Stromerzeugung genutzten Spektralbereich.

Die Rückseite des Solarzellenmoduls ist insbesondere die, die bei vorgesehener Montagerichtung und oder im montierten Zustand von der Sonneneinstrahlung abgewandt ist.

Das In-Kontakt-Bringen kann dadurch erfolgen, dass der Luft-Flüssigkeits-Wärmetauscher bereits im Hohlraum angeordnet ist und/oder die erwärmte Luft durch Thermik und/oder durch Fördermittel an den Luft-Flüssigkeits-Wärmetauscher geführt und/oder an dem Luft-Flüssigkeits-Wärmetauscher vorbeigeführt wird. Auch ein Kreislauf ist denkbar, bei dem die Luft anschließend wieder dem Hohlraum zugeführt wird und/oder im Hohlraum zirkuliert (wird). Je nach Ausführung, aktueller Strom- und Wärmeanforderung und/oder Wetterlage kann es dabei vorteilhaft sein, einen Kreislauf zu betreiben oder frische Luft zuzuführen. Das Zuführen frischer/kühlerer Luft kann den Wirkungsgrad der Stromerzeugung der Solarzellen erhöhen, wohingegen ein Kreislauf die Temperatur der Luft erhöhen kann. Auch Mischformen sind denkbar. Daher kann es vorteilhaft sein, die Führung der Luft und/oder die Menge der Abluft und/oder Zuluft in den Hohlraum zu steuern. Dies kann beispielsweise durch Steuerung von Klappen und/oder Ventilen und/oder Ventilatoren erfolgen. Dabei kann es auch vorteilhaft sein, das Verhältnis von am Luft-Flüssigkeits-Wärmetauscher vorbeigeführter und daran nicht vorbei geführter Abluft aus dem Hohlraum zu ändern oder zu steuern. Denn ein Vorbeiführen ist in der Regel mit einem erhöhten Strömungswiderstand verbunden, sodass in der Regel höhere Abluftmengen oder Abluftmengen mit weniger Stromverbrauch für Ventilatoren realisierbar sind, wenn nicht durch den oder am Luft-Flüssigkeits-Wärmetauscher vorbeigeführt. Mit Vorteil weist das System die entsprechenden Mittel und eine entsprechend dafür eingerichtete Steuerung auf. Dabei kann durch eine erhöhte Abluftmenge auch eine Aufheizung eines unter/hinter dem Hohlraum befindlichen Gebäudeinneren reduziert werden. Bevorzugt wird es also, wenn das System so eingerichtet ist und/oder so verfahren wird, dass bei überschüssiger Wärme, die aus dem Luft-Flüssigkeits-Wärmetauscher bezogen wird und/oder wenn keine Wärme aus dem Luft-Flüssigkeits-Wärmetauscher bezogen werden soll, höhere Abluftmengen realisiert werden und/oder die Menge der Abluft, die nicht am Luft-Flüssigkeits-Wärmetauscher vorbeigeführt wird, erhöht wird. Dies kann durch entsprechende Steuerung von Ventilatoren und/oder Luftleitvorrichtungen wie Ventilen und/oder Klappen erfolgen.

Am Luft-Flüssigkeits-Wärmetauscher vorbeiführen bedeutet insbesondere, dass die Luft so am Luft-Flüssigkeits-Wärmetauscher vorbeigeführt wird, dass Luft und Luft-Flüssigkeits-Wärmetauscher Wärme austauschen können und/oder durch das vorbeiführen ein Strömungswiderstand entsteht.

Unter einem X-Y-Wärmetauscher ist insbesondere ein Wärmetauscher zu verstehen, der nicht nur dazu geeignet, sondern dazu vorgesehen ist, Wärme aus dem Medium X auf das Medium Y zu übertragen. Insbesondere ist er speziell zum Austausch von Wärme zwischen Medium X und dem Medium Y konzipiert. Insbesondere weist er mindestens eine erste Fläche auf, die dazu vorgesehen ist, mit dem Medium X in Kontakt gebracht zu werden und mindestens eine zweite Fläche auf, die dazu vorgesehen ist, mit dem Medium Y in Kontakt gebracht zu werden, wobei die mindestens eine erste Fläche und die mindestens zweite Fläche thermisch gekoppelt sind und insbesondere einen kleinen Abstand aufweisen. Insbesondere ist das System so ausgestaltet und/oder wird das Verfahren so geführt, dass die Oberfläche der mindestens einen ersten Fläche gegenüber der Begrenzung des Mediums X stromaufwärts des Wärmetauschers größer ist, insbesondere um mindestens um 400%. Insbesondere ist das System so ausgestaltet und/oder wird das Verfahren so geführt, dass die Oberfläche der mindestens einen zweiten Fläche gegenüber der Begrenzung des Mediums Y stromaufwärts und/oder stromabwärts des Wärmetauschers größer ist, insbesondere um mindestens um 400%. Dabei werden die Flächenbetrachtungen insbesondere bezüglich eines Leitungsabschnitts gleicher Länge durchgeführt, wobei die Länge insbesondere in Strömungsrichtung anzunehmen ist, wobei insbesondere bei paralleler Führung, in Reihen- und/oder Serienschaltung die Flächen der parallelen Führung zu addieren sind.

Insbesondere sind die erste und zweite Fläche durch Metall, insbesondere Aluminium und/oder Kupfer und/oder thermisch ähnlich leitfähige Materialien gebildet.

Die warme Luft durchströmt insbesondere den Wärmetauscher. Zum Beispiel mittels mindestens einem integrierten Rohr, auch Flüssigkeitsführungsrohr, aus Kupfer oder anderem Material kann die Wärmeenergie aus der warmen Luft in die Flüssigkeit übertragen werden.

Mit Vorteil sind der Kältemittelkreislauf, der Verdampfer, die Wärmepumpe, der weitere Wärmetauscher und/oder der Pufferspeicher örtlich entfernt vom Hohlraum und/oder dem Luft-Flüssigkeitswärmetauscher angeordnet, insbesondere innerhalb der thermischen Hülle, in einem Keller, Erdgeschoss und/oder Hauswirtschaftsraum eines Gebäudes außerhalb dessen thermischen Hülle, an dessen Fassade, Dach oder in dessen Außenanlagen der Hohlraum angeordnet ist. Dadurch lassen sich die Vorteile der Erfindung besonders gut nutzen. Insbesondere können dort in warmen Innenräumen große und damit schwere Pufferspeicher ohne statische Probleme und übermäßige Wärmeverluste aus der Gebäudehülle heraus realisiert werden. Mit Vorteil ist insbesondere bei einer solchen Ausführung der Flüssigkeitskreislauf thermisch isoliert, also sind insbesondere die Rohre zur Verbindung des Luft-Flüssigkeits-Wärmetauschers, auch Förderrohre, und des weiteren Wärmetauschers mit thermischer Isolation umgeben, zumindest insbesondere solche, die Flüssigkeit vom Luft-Flüssigkeits-Wärmetauschers zum weiteren Wärmetauscher fördern.

Der Pufferspeicher ist insbesondere mit Wasser gefüllt. Dabei kann das Wasser auch Zuschläge wie anti-Korrosionsmittel beinhalten. Auch können in dem Pufferspeicher, insbesondere von Wasser umgeben, Phasenwechselmedien angeordnet sein, um dessen thermische Kapazität zu erhöhen. Der Pufferspeicher weist insbesondere ein Volumen von mehr als 500, bevorzugt mehr als 1500 Liter auf. Bevorzugt ist der Pufferspeicher mit einer thermischen Isolationsschicht umgeben.

Mit Vorteil kann die thermische Differenz zwischen dem Kältemittelkreislaufs, insbesondere seines Verdampferzweigs oder seines Verdampfers und dem Flüssigkeitskreislauf auch zur Erzeugung elektrischer Energie unter Nutzung des Seebeckeffekts genutzt werden. So kann zunächst (also insbesondere strömungstechnisch vor der Führung des Kältemittels und/oder der Flüssigkeit am weiteren Wärmetauscher vorbei) das thermische Potenzial zur Erzeugung von Strom genutzt und das stromabwärts etwas geringere thermische Potenzial durch den weiteren Wärmetauscher reduziert werden. Bevorzugt ist das System entsprechend eingerichtet.

Mit Vorteil ist der Flüssigkeitskreislauf ein Flüssigkeitskreislauf ohne Kompressor und/oder ist der Flüssigkeitskreislauf kein Kältemittelkreislauf und/oder ein Flüssigkeitskreislaufs ohne Entspannungsvorrichtung.

Mit Vorteil ist die Flüssigkeit des Flüssigkeitskreislaufs eine solche, die bei Standardbedingungen einen Siedepunkt über 50°C, insbesondere über 80°C, aufweist und/oder der Flüssigkeitskreislauf ein Flüssigkeitskreislaufs mit einem Druck unter 3 bar, insbesondere unter 2 bar ist und/oder weist die Flüssigkeit Frostschutzmittel auf und/oder ist der Flüssigkeitskreislauf ein Flüssigkeitskreislaufs abgesehen von einer darin angeordneten Pumpe einer mit Querschnittvariation unter 20% des maximalen Querschnitts des die Flüssigkeit führenden Volumens und/oder einer mit konstantem Querschnitt des die Flüssigkeit führenden Volumens und/oder ist der Flüssigkeitskreislauf ein Flüssigkeitskreislaufs mit Pumpe und/oder ist die Flüssigkeit durch Wasser oder durch Wasser mit Zuschlägen, beispielsweise Frost- und/oder Korrosionsschutzmittel, gebildet und/oder weist dies auf. Insbesondere ist der Druck im Flüssigkeitskreislauf im Wesentlichen allein vom Schweredruck der auf der Flüssigkeit lastenden Flüssigkeit des Flüssigkeitskreislauf abhängig. Insbesondere wird die Flüssigkeit im Flüssigkeitskreislauf im Kreis durch den Flüssigkeitskreislauf gepumpt, insbesondere ohne komprimiert oder entspannt zu werden. Insbesondere wird im Flüssigkeitskreislauf nur Flüssigkeit und kein Gas geführt.

Durch eine solche Ausgestaltung und/oder Verfahrensführung wird eine besonders effiziente Ausgestaltung erreicht, die auch nicht auf Kältemittel im, ggf. gro-ßen, Flüssigkeitskreislauf angewiesen ist. Auch kann so ohne den Einsatz von Kältemittel Wärme in einen Pufferspeicher eingebracht werden. Besonders bevorzugt wird es, wenn abhängig von der Temperatur im Flüssigkeitskreislauf und/oder im Pufferspeicher ein Kältemittelkreislauf geheizt, der direkt oder indirekt den Pufferspeicher heizt oder der Pufferspeicher direkt geheizt wird. So kann, beispielsweise im Sommer und/oder Übergangszeiten gänzlich auf den Einsatz der Wärmepumpe verzichtet werden und der Pufferspeicher, beispielsweise für den Bezug warmen Brauchwassers oder auch von Wärme zu Heizwecken, direkt durch den Flüssigkeitskreislauf geheizt werden. Auch an sonnigen Tagen im Winter kann dies ausreichen, insbesondere wenn nur geringe Vorlauftemperaturen benötigt werden. Es kann auch der Heizkreislauf, beispielsweise einer Flächenheizung direkt mittels des Flüssigkeitskreislaufs geheizt werden oder es kann der Heizkreislauf in den Flüssigkeitskreislauf eingebunden werden. Dadurch können Wärmeverluste am weiteren Wärmetauscher vermieden werden. Insbesondere ist/wird ein erster und ein zweiter weiterer Wärmetauchscher vorgesehen, ein erster insbesondere, eingerichtet zur Erwärmung eins Kältemittelkreislaufs, insbesondere einer Wärmepumpe und/oder zur Erwärmung eines Verdampfers, und ein zweiter eingerichtet zur Erwärmung eines Pufferspeichers und/oder eines Heizkreislaufs, insbesondere eines Flächenheizkreislaufs.

Eine direkte Heizung des Heizkreislaufs und/oder des Pufferspeichers ist wird insbesondere dann und/oder solange durchgeführt, wenn/wie die Temperatur der Flüssigkeit eine vorbestimmte Temperatur übersteigt die insbesondere wenige Grad oberhalb, insbesondere einige Grad oberhalb (beispielsweise im Bereich 1 bis 10°C oberhalb), der vorbestimmten Solltemperatur des Pufferspeichers und/oder der Vorlauftemperatur des Heizkreislaufs liegt und/oder wenn die Temperatur des Pufferspeichers und/oder die Vorlauftemperatur unterhalb, insbesondere einige Grad (beispielsweise im Bereich 1 bis 10°C) unterhalb, der Temperatur des Flüssigkeitskreislaufs liegt. Die Temperatur des Flüssigkeitskreislaufs ist insbesondere eine der Flüssigkeit nach Passieren des Luft-Flüssigkeitswärmetauschers und vor Passieren des weiteren Wärmetauschers und/oder vor dem Erwärmen eines Kältemittelkreislaufs, eines Pufferspeichers und/oder Eintritt in einen und/oder Erwärmen eines Heizkreislaufs. Mit besonderem Vorteil weist das System eine entsprechend eingerichtete Steuerung auf.

Mit Vorteil ist im, am und/oder oberhalb und/oder am oberen Endes des Hohlraums eine Sammelvorrichtung, insbesondere ein Sammelrohr, für Luft aus dem Hohlraum angeordnet und/oder wird im, am und/oder oberhalb des Hohlraums erwärmte Luft gesammelt. Insbesondere ist das System eingerichtet und/oder wird das Verfahren so geführt, dass gesammelte Luft dem Luft-Flüssigkeits-Wärmetauscher zugeführt wird. Dies kann mittels Thermik geschehen und/oder durch einen Ventilator unterstützt und/oder bewirkt werden. Durch das Sammeln kann der Luft-Wärmetauscher kompakter ausgeführt und kann eine gezielte Lenkung der Luftmassen erfolgen. Das Sammeln kann dabei beispielsweise mittels eines Sammelrohrs und/oder einer Leitvorrichtungen, wie Blechen, erfolgen. Je weiter oben innerhalb des Hohlraums dies erfolgt, desto besser kann in den meisten Ausgestaltungen die Wärme und/oder Thermik genutzt werden. Andere Anforderungen können aber Kompromisse bezgl. der Anordnung vorteilhaft erscheinen lassen.

Bevorzugt weist das System eine Kondens- und/oder Abtauwasserabführung, insbesondere in dem Bereich des Luft-Flüssigkeits-Wärmetauscher und/oder im Firstrohr und/oder der Sammelvorrichtung auf und/oder wird am Luft-Flüssigkeits-Wärmetauscher anfallendes Kondens- und/oder Tauwasser abgeführt, insbesondere aus dem Hohlraum und/oder damit verbundenen die Luft leitenden Leitungen. Dadurch lässt sich ein dauerhafter Betrieb ohne Störung durch Flüssigkeitsansammlungen, ohne Feuchtigkeitsschäden und/oder Schimmelbildung erreichen.

Mit Vorteil kann je nach Ausgestaltung der weitere Wärmetauscher des Flüssigkeitskreislaufs auch Teil eines Kältemittelkreislaufs einer Wärmepumpe sein, und/oder ist das System insbesondere eingerichtet und/oder wird das Verfahren insbesondere geführt, die durch die Wärmepumpe unter Nutzung der Wärme der Flüssigkeit des Flüssigkeitskreislaufs erzeugte Wärme einem oder dem Pufferspeicher zuzuführen, und/oder die Wärme direkt in den Pufferspeicher und/oder einen Heizungskreislauf, z.B. Flächenheizung, einzuspeisen. Teil eines Kältemittelkreislaufs kann der weitere Wärmetauscher beispielsweise sein, wenn er dazu eingerichtet und angeordnet ist, dass Kältemittel durch ihn und/oder an ihm vorbeifließt, um Wärme von der Flüssigkeit mittels des weiteren Wärmetauschers aufzunehmen. So kann beispielsweise der Verdampfer eines Kältemittelreislaufs und/oder die ihm nachgelagerten Rohre erwärmt werden. In der Regel wird dadurch somit das im Verdampfer durch Entspannung entstandene Gas oder Flüssigkeits-Gas-Gemisch erwärmt, insbesondere bevor es (wieder) komprimiert wird, um Wärme einer nachgelagerten Einrichtung, wie Pufferspeicher und/oder Heizkreislauf, zuzuführen, bevor es im Verdampfer wieder verdampft wird. Durch eine solche Ausgestaltung lassen sich die Vorteile der Erfindung besonders zweckmäßig und einfach realisieren.

Ein Wärmetauscher, insbesondere Luft-Flüssigkeits-Wärmetauscher, ausgebildet in Form und/oder innerhalb eines Rohres, insbesondere Verlängerungs- und/oder Sammelrohr, mit integriertem/n Rohr(en), auch Flüssigkeitsführungsrohr(e), das/die mit Flüssigkeit durchströmt werden oder in einer und/der als Kassette mit integriertem/n Rohr(en), auch Flüssigkeitsführungsrohr(e), das/die mit Flüssigkeit durchströmt werden, ist besonders vorteilhaft. Das/Die Rohr(e) kann/können mit oder ohne zusätzliche Lamellen zur besseren Wärmeabsorption oder anderen Zusätzen zur besseren Wärmeaufnahme ausgestattet sein. Integriert mit Rohr(en) mit oder ohne Lamellen, die die Wärmeenergie in der abgesaugten warmen Luft aus der Dachhaut in das flüssige Medium einbringt, welches durch das/die Rohr(e) fließt und zur Wärmepumpen-Einheit fließt, kann eine besonders effiziente Lösung realisiert werden.

Der Luft-Flüssigkeits-Wärmetauscher, der insbesondere in den First und/oder eine Kassette und/oder den Hohlraum integriert wird, besteht insbesondere aus oder ist insbesondere angeordnet in einem Außenrohr, auch Sammel- und/oder Verlängerungsrohr, z.B. gleich oder ähnlich dem aus dem Stand der Technik bekannten Rohr im First zur Absaugung der warmen Luft aus der Dachhaut oder als und/oder in einer Kassette mit Lufteintritts- und Luftaustrittsöffnung. Dieser Rohr-Wärmetauscher kann in den First integriert werden, die Kassette in die Dachhaut und/oder den Hohlraum. Der Luft-Flüssigkeits-Wärmetauscher kann in den First oder das Dach integriert werden. Alternativ kann der Luft-Flüssigkeits-Wärmetauscher z. B. unter oder auf sonstige Weise am First und/oder am Dach angebracht werden.

Mit Vorteil ist der Luft-Flüssigkeits-Wärmetauscher gebildet durch mindestens ein Rohr, auch Flüssigkeitsführungsrohr, insbesondere eine Vielzahl von miteinander verbundenen Rohren, wobei das mindestens eine Rohr, insbesondere die Vielzahl, vorzugsweise von Lamellen aus Metall umgeben ist/sind, wobei die Rohre insbesondere parallel zueinander angeordnet und/oder mit (Rund-)Bögen miteinander gekoppelt sind, wobei die Lamellen eines Rohrs im Querschnitt insbesondere eine Außenkontur aufweisen die rechteckig, quadratisch oder sechseckig ist und insbesondere die Lamellen der parallelen Rohre im Querschnitt gemeinsam eine Außenkontur bilden, die rechteckig und/oder quadratisch ist und/oder die Lamellen der parallelen Rohre im Querschnitt eine Wabenstruktur ausbilden, wobei das mindestes eine Rohr und/oder die parallelen Rohre und ihre Lamellen insbesondere im Hohlraum oder einem mit diesem strömungstechnisch verbundenen Sammelrohr oder Kassette angeordnet sind und insbesondere mit derselben Richtung der Längserstreckung wie das Sammelrohr angeordnet ist/sind. Derartige Ausgestaltungen erhöhen die Effizienz.

Dabei können die Lamellen, insbesondere benachbarter Rohre gemeinsam, insbesondere eine Vielzahl, bevorzugt mindestens 10 pro Rohr, von, insbesondere geraden, Luftkanäle(n) zur Führung der erwärmten Luft ausbilden. Die Luftkanäle sind durch die Lamellen insbesondere zu vier Raumrichtungen hin geschlossen. Die Längserstreckung der Rohre und/oder Luftkanäle verläuft bevorzugt in Strömungsrichtung der erwärmten Luft, insbesondere wenn diese vom Hohlraum ausgehend zu der mindestens einen Austrittsöffnung und/oder durch den Wärmetauscher und/oder durch die Sammelvorrichtung, strömt. Bevorzugt wird die erwärmte Luft entsprechend geführt. Dies erhöht die Effizient bei geringer Erhöhung des Luftwiderstandes.

Die Rohre sind insbesondere so gekoppelt und/oder wird das Verfahren so geführt, dass die Flüssigkeit des Flüssigkeitskreislaufs durch sie hindurchfließt, dabei können insbesondere Reihen- und/oder Parallelschaltungen der Rohre gewählt werden. Bevorzugt wird in einer besonders einfach realisierbaren Anordnung die Reihenschaltung der Rohre, insbesondere mittels Rundbögen, die jeweils zwei, insbesondere benachbarte Enden, von Rohren an einer Stirnseite verbinden. Dadurch fließt die Flüssigkeit im Flüssigkeitskreislauf im Luft-Flüssigkeits-Wärmetauchscher dann in den Rohren abwechselnd in und gegen die Strömungsrichtung der Luft. Insbesondere in einem solchen Fall ist es besonders bevorzugt, wenn die Lamellen Wärmebrücken zwischen den Rohren ausbilden um die Temperaturdifferenz zwischen den benachbarten Rohren nicht zu groß werden zu lassen.

Die Lamellen stehen insbesondere von den Rohren jeweils nach außen ab, insbesondere radial. Sie weisen insbesondere ein Längserstreckung parallel zum jeweiligen Rohr auf. Pro Rohr ist bevorzugt eine Anzahl von Lamellen im Bereich von 10 bis 40 vorgesehen. Dies stellt ein ausgewogenes Verhältnis zwischen Luftwiderstandserhöhung und Wärmeübertrag dar.

Die parallelen Rohre sind, insbesondere betrachtet im Querschnitt senkrecht auf der Längserstreckung der Rohre, bevorzugt in min. zwei Raumrichtungen, senkrecht zu ihrer Längserstreckung parallel nebeneinander angeordnet, dabei weisen die Richtungen insbesondere einen Winkel im Bereich von 45 bis 135° auf. So kann eine besonders kompakte und effiziente Ausgestaltung realisiert werden.

Die Rohre je und/oder der Luft-Flüssigkeits-Wärmtauscher weisen/weist insbesondere eine Rohrlänge bzw. Länge, insbesondere in Richtung der Strömungsrichtung der erwärmten Luft im Wärmetauscher, im Bereich von 50 cm bis 2 m auf. Der Luft-Flüssigkeitswärmetauscher und/oder das Verlängerungs- und/oder Sammelrohr weist insbesondere einen Durchmesser im Bereich von 1 cm bis 1m, bevorzugt im Bereich von 10cm bis 50 cm und/oder eine Anzahl von parallelen Rohren im Bereich von 4 bis 40, insbesondere 15 bis 30, auf. Dies stellt ein ausgewogenes Verhältnis zwischen Luftwiderstandserhöhung und Wärmeübertrag dar.

Die Kassette weist insbesondere in zwei Raumrichtungen eine größere Erstreckung als in eine dritte auf. In die dritte Raumrichtung weist die Kassette insbesondere eine Erstreckung im Bereich von 10 bis 50 cm, insbesondere im Bereich von 15 bis 40 cm auf. Diese Erstreckung oder dritte Raumrichtung liegt insbesondere senkrecht zur äußeren Abschlussebene des Hohlraums und/oder der Ebene der, insbesondere, äußeren, Dachhaut. Insbesondere liegt die Kassette zumindest teilweise innerhalb des Hohlraums, insbesondere überspannte sie seine Höhe vollständig. Insbesondere liegt der Luft-Flüssigkeitswärmetauscher, das Firstrohr und/oder die Kassette außerhalb der inneren Dachhaut und/oder außerhalb des Innenraums des Gebäudes und/oder außerhalb der inneren Gebäudehülle.

Insbesondere durchdringt der Luft-Flüssigkeitswärmetauscher, das Firstrohr und/oder die Kassette die Gebäudehülle nicht vollständig.

Mit besonderem Vorteil bildet die Kassette einen Teil der äußeren Gebäudehülle oder ist sie dafür eingerichtet. Insbesondere weist sie mindestens eine Lufteintrittsöffnung ein einer, insbesondere unteren und/oder seitlichen, sich in die dritte Raumrichtung erstreckenden Seite auf und/oder mindestens eine Luftaustrittsöffnung an einer dazu senkrechten oder parallelen Seite, insbesondere einer der größten und/oder oberen Seiten, und/oder der zur Bildung eines Teils der Gebäudehülle eingerichteten oder diesen Teil bildenden Seite auf. Die Luftaustrittsöffnung ist insbesondere regengeschützt ausgeführt. Insbesondere ist sie mit einem Luftleitkanal so ausgebildet, dass die Luft nach Durchdringung der Seite der Kassette um 130 bis 270° und/oder in Richtung entgegen der Strömungsrichtung durch mindestens eine, insbesondere untere, Lufteintrittsöffnung und/oder nach unten umgelenkt wird. Auch kann die Anordnung so eingerichtet sein, dass die Luft aus der Kassette in der Ebene des Hohlraums austritt und durch eine kurze Fortsetzung des Hohlraums weiter strömen, um dann am First ausgelassen zu werden.

Je nach Ausgestaltung kann es vorteilhaft sein nur einen Luft-Wasser-Wärmetauscher zu verwenden oder mehrere, beispielsweise im Sammelrohr, hintereinander und/oder kaskadiert zu verwenden. Beim Einsatz von mehreren kann es bevorzugt sein, deren Flüssigkeitsführung im Flüssigkeitskreislauf in Reihe zu schalten.

Mit Vorteil weist das mindestens eine Solarzellenmodul Eintrittsöffnungen auf und/oder bildet es sie aus, durch die Luft in den Hohlraum einströmen kann und/oder weist das System, insbesondere die Sammelvorrichtung mindestens eine Austrittsöffnung auf, durch die Luft aus dem Hohlraum austreten kann, wobei bevorzugt die mindestens eine Austrittsöffnung höher liegt als eine und/oder alle Eintrittsöffnungen und/oder ist der Luft-Flüssigkeits-Wärmetauscher so angeordnet, dass Luft, die durch die Eintrittsöffnungen in den Hohlraum eingetreten ist, vor dem Austritt durch die Austrittsöffnung an dem Luft-Flüssigkeits-Wärmetauscher vorbei strömt und wobei das System insbesondere so eingerichtet ist, dass durch die Erwärmung der Luft im Hohlraum eine Thermik bewirkt wird, wobei alternativ und/oder unterstützend auch mindestens ein Ventilator vorgesehen werden kann, der Luft durch die Eintrittsöffnungen ansaugt und aus der mindestens einen Austrittsöffnung austreten lässt. Mit Vorteil wird das Verfahren entsprechend geführt.

Je nach Ausgestaltung ist es bevorzugt, mindestens eine, insbesondere verschließbare, insbesondere automatisch verschließbare, Schnelllüftungsöffnung, insbesondere endständig an der Sammelvorrichtung und/oder gegenüberliegend der Austrittsöffnung, zur Ermöglichung des Luftaustritts ohne Passage am Luft-Flüssigkeits-Wärmetauschers vorbei, insbesondere aufweisend einen Ventilator zur Förderung des Luftaustritts aus der Schnelllüftungsöffnung vorzusehen. Mit Vorteil wird das Verfahren entsprechend geführt.

Die Eintrittsöffnungen können je nach Ausgestaltung bevorzugt auch als eine Vielzahl von Eintrittsöffnungen auf/in der Fläche und/oder (zusätzlich) am unteren Bereich und/oder unteren Ende der Fläche und/oder des Hohlraums angeordnet sein. Mit Vorteil ist eine Vielzahl von Eintrittsöffnungen über die Fläche, bevorzugt, im wesentlichen gleichmäßig verteilt, insbesondere mit vertikalem und/oder horizontalen Abstand von einer benachbarten, insbesondere jeweils von in vier Richtungen benachbarten, sofern nicht randständig, von weniger als 1m, insbesondere weniger als 75cm. Insbesondere sind die Ein- und Austrittsöffnungen regengeschützt ausgeführt. Insbesondere werden Eintrittsöffnungen an Überlappungen von Solarzellenmodulen, Schindeln und/oder Fassadenelementen ausgebildet. Insbesondere können Solarzellenmodule, Fassadenelemente und/oder Schindeln mit zwischenliegenden Gummilippen aufeinander überlappend und/oder Solarzellenmodulen, Schindeln und/oder Fassadenelementen mit zwischenliegenden Gummilippen aneinander angrenzend angeordnet werden und können in den Gummilippen durch Aussparungen Eintrittsöffnungen geschaffen werden. Zudem kann an der Traufe oder im unteren Bereich und/oder am unteren Ende des Hohlraums mindestens eine, insbesondere größere, Eintrittsöffnung angeordnet werden. Durch die verteilten Eintrittsöffnungen kann eine effiziente Kühlung der Solarzellenmodule erreicht werden und die Thermik verstärkt werden. Insbesondere sind die über die Fläche verteilten Eintrittsöffnungen jeweils kleiner ausgebildet als die mindestens eine untere Eintrittsöffnung und/oder eine oder mehrere an der Traufe.

Mit besonderem Vorteil weist die Vorrichtung eine Abtauvorrichtung zum Abtauen des Luft-Flüssigkeitswärmetauscher auf und/oder wird das Verfahren so geführt, dass der Luft-Flüssigkeitswärmetausche zeitweilig, also manchmal, insbesondere bei zu großer Eisbildung und/oder nach Unterschreiten bestimmter Temperaturen im Flüssigkeitskreislauf für eine gewisse Zeitspanne, abgetaut wird. Dazu können im und/oder am Luft-Flüssigkeits-Wärmetauscher und/oder der Sammelvorrichtung und/oder im Hohlraum Heizmittel, insbesondere elektrische, vorgesehen sein und/oder Mittel vorgesehen sein, um den Flüssigkeitskreislauf zu heizen. So kann beispielsweise auch ein Beheizen und/oder Abtauen mittels der Wärme des Pufferspeichers und/oder erzeugt durch die Wärmepumpe durchgeführt werden und/oder das System dazu eingerichtet sein.

Mit Vorteil weist das Solarzellenmodul mindestens eine transparente Deckschicht, eine Solarzelle und mindestens eine dunkle, insbesondere schwarze, oder transparente Unterschicht auf und/oder sind dies, insbesondere neben Kontaktierungen und deren Abdeckung/Isolation die wesentlichen oder alle Bestandteile. Mit Vorteil weist das Solarzellenmodul eine Dicke im Bereich von 0,3 bis 5 cm, insbesondere über mindestens 70% seiner flächigen Erstreckung eine Dicke von weniger als 2 cm, insbesondere weniger als 1 cm, auf. Dadurch lässt sich eine besonderes gute Erwärmung der Luft im Hohlraum erreichen.

Bevorzugt ist das mindestens eine Solarzellenmodul Teil einer, insbesondere geneigten, Dachhaut, insbesondere ihres äußeren Teils, unter dem insbesondere Holzverschalung, Lattung und/oder Unterspannbahn angeordnet sind, und/oder ist insbesondere oberhalb und/oder auf der Höhe des obersten Solarzellenmoduls die Sammelvorrichtung für im Hohlraum erwärmte Luft, insbesondere als Firstrohr, ausgebildet und ist insbesondere der Luft-Flüssigkeits-Wärmetauscher, insbesondere in einem endständigen, Abschnitt der Sammelvorrichtung und/oder zusammen mit einem Ventilator, angeordnet, wobei der den Luft-Flüssigkeits-Wärmetauscher aufweisende Teil der Sammelvorrichtung insbesondere eine Kondenswasser- und/oder Abtauwasserabfuhrvorrichtung aufweist. Eine solche Ausgestaltung ermöglicht die besonders effiziente, einfache und/oder großflächige Nutzung der Sonneneinstrahlung

Bevorzugt ist/wird der Hohlraum zwischen Holzverschalung und/oder Unterspannbahn auf der einen und Solarzellenmodul auf der anderen Seite ausgebildet und insbesondere durch die Dachlattung aufgespannt. Dies ermöglicht eine besonders einfache und materialsparende Konstruktion, bei der sich zudem die thermische Masse des mindestens einen Solarzellenmodul gering und/oder die Wärmeübertragung von der Solarzelle in den Hohlraum hochhalten lässt.

In einer alternativen bevorzugten Ausgestaltung ist das mindestens eine Solarzellenmodul Teil einer Sichtschutzwand, eines Zauns und/oder einer Fassade. In einer solchen Ausgestaltung weist das Solarzellenmodul meist eine weniger geneigte, teilweise sogar vertikale Orientierung auf. Dies kann aber gerade bei tief stehender Sonne vorteilhaft sein, was beispielsweise besonders im Winter der Fall ist, in dem besonders viel Wärme benötigt wird. Der Hohlraum kann dabei mit seiner Erstreckung auch vertikal ausgebildet sein. In ihm können auch Ventilator und/oder Leitblech angeordnet sein. Der Luft-Flüssigkeits-Wärmetauscher kann dabei je nach Ausgestaltung beispielsweise in vertikaler Erstreckung im oberen Bereich des Hohlraums und/oder abgesehen von einem untern Bereich des Hohlraums im Hohlraum angeordnet sein, was insbesondere bei vergleichsweise kurzen vertikalen Erstreckungen, insbesondere unter 3m, insbesondere unter 2m, bevorzugt wird oder in oder nach einer Sammelvorrichtung. So kann beispielsweise ein Toprohr verwendet werden, das im oberen Bereich oder oberhalb des Hohlraums angeordnet ist und zum Luft-Flüssigkeits-Wärmetauscher führt oder diesen beinhaltet, hier gilt insbesondere zum Firstrohr Ausgeführtes.

Die Solarzellenmodule können beispielsweise eine vorgehängte Fassade bilden oder Teil einer solchen sein. Der Hohlraum kann dann beispielsweise durch eine Wand, beispielsweise aus Holz, Stein, Beton, Putz und/oder Dämmmaterial auf der dem Solarzellenmodul gegenüberliegen Seite begrenzt sein. Dadurch lässt sich materialsparend ein Hohlraum realisieren und lassen sich auf einfache Weise große Flächen nutzen. Auch kann durch Vorhängen der Solarzellenmodule vor eine bestehende, beispielsweise zu renovierende oder sanierende Fassade, eine Erneuerung des Gebäudes durch eine zusätzliche Schutzschicht und eine neue Optik erreicht werden, in dem einfach Solarzellenmodule vorgehängt werden und dadurch ein Hohlraum ausgebildet wird.

Insbesondere wenn keine Sammelvorrichtung verwendet und/oder ein Hohlraum ohne Luftaustrittsöffnung verwendet wird, kann es vorteilhaft sein, im Hohlraum Leitvorrichtungen, insbesondere Leitbleche zu montieren, um eine Zirkulation der Luft im Hohlraum zu erreichen. Dazu wird insbesondere eine Anordnung verwendet, die eine teilweise Trennung des Hohlraums in zwei vertikale Räume bewirkt und/oder so, dass Luft unmittelbar hinter dem Solarzellenmodul aufsteigen kann und davon durch die Leitvorrichtung getrennt dahinter Luft absteigen kann.

Mit Vorteil kann das System eine Pumpe aufweisen, die Teil des Flüssigkeitskreislaufs ist und/oder eine Wärmepumpe aufweisen, deren Kältemittelkreislauf, insbesondere deren Verdampfer, mit dem Flüssigkeitskreislauf mittels des weiteren Wärmetauschers thermisch gekoppelt ist, und/oder das System eingerichtet sein und/oder das Verfahren so geführt werden, die Wärmepumpe und/oder die Pumpe mittels durch das mindestens eine Solarzellenmodul erzeugtem Strom zu betreiben. Dadurch kann das Verfahren/System besonders effizient und nachhaltig ausgestaltet werden.

Mit besonderem Vorteil weist das System eine Pumpe, die Teil des Flüssigkeitskreislaufs ist und/oder eine Wärmepumpe, deren Kältemittelkreislauf, insbesondere Verdampfer, mit dem Flüssigkeitskreislauf thermisch gekoppelt ist, und/oder einen Pufferspeicher zur Speicherung von Wärme und/oder einen Ventilator zur Förderung erwärmter Luft auf.

Mit besonderem Vorteil weist das System eine Steuerungsvorrichtung auf, wobei die Steuerungsvorrichtung zur Steuerung der Pumpe und/oder der Wärmepumpe eingerichtet ist und und/oder wird das Verfahren so geführt, die Pumpe so zu steuern, dass die Pumpe bei Übersteigen einer ersten vorbestimmten Temperatur der erwärmten Luft, des Luft-Flüssigkeits-Wärmetauschers und/oder des Flüssigkeitskreislaufs startet und/oder bei Unterschreiten einer zweiten vorbestimmten Temperatur der erwärmten Luft, des Luft-Flüssigkeits-Wärmetauschers und/oder des Flüssigkeitskreislaufs stoppt und/oder deren Fördervolumen reduziert wird. Dabei können die vorbestimmten Temperaturen absolut oder relativ auch zu variablen Temperaturen, beispielsweise als Differenz zu einer anderen Temperatur, beispielsweise des Kältemittelkreislaufs, des Pufferspeichers und/oder der Vorlauftemperatur festgelegt sein. Insbesondere sind die erst und zweite vorbestimmte Temperatur ähnlich aber insbesondere so gewählt, dass eine Hysterese erreicht wird, und/oder kurze Taktzeiten des Ein- und Ausschaltens möglichst vermieden werden. Insbesondere ist die erste höher als die zweite, insbesondere um eine geringe, insbesondere einstellige Gradzahl, insbesondere im Bereich von 3 bis 10°C.

Mit besonderem Vorteil weist das System eine Steuerungsvorrichtung auf, wobei die Steuerungsvorrichtung zur Steuerung des Ventilators eingerichtet ist und/oder wird das Verfahren so geführt, den Ventilator so zu steuern, dass der Ventilator bei Übersteigen einer dritten vorbestimmten Temperatur der erwärmten Luft, des Luft-Flüssigkeits-Wärmetauschers und/oder einer Temperaturdifferenz zwischen der erwärmten Luft auf der einen Seite und des Flüssigkeitskreislaufs und/oder des Luft-Flüssigkeits-Wärmetauschers auf der anderen Seite startet und/oder dessen Fördervolumen erhöht wird und/oder deren Fördervolumen erhöht wird und/oder bei Unterschreiten einer vierten vorbestimmten Temperatur der erwärmten Luft, des Luft-Flüssigkeits-Wärmetauschers und/oder einer Temperaturdifferenz zwischen der erwärmten Luft auf der einen Seite und des Flüssigkeitskreislaufs und/oder des Luft-Flüssigkeits-Wärmetauschers auf der anderen Seite stoppt und/oder dessen Fördervolumen reduziert wird. So kann das Verfahren besonders effizient geführt werden, Pumpenstrom gespart werden, insbesondere ohne Wärme unnötig ungenutzt zu lassen.

Dabei können die vorbestimmten Temperaturen absolut oder relativ auch zu variablen Temperaturen, beispielsweise als Differenz zu einer anderen Temperatur, beispielsweise des Kältemittelkreislaufs, des Pufferspeichers und/oder der Vorlauftemperatur festgelegt sein. Insbesondere sind die dritte und vierte vorbestimmte Temperatur ähnlich aber insbesondere so gewählt, dass eine Hysterese erreicht wird, und/oder kurze Taktzeiten des Ein- und Ausschaltens möglichst vermieden werden. Insbesondere ist die dritte höher als die vierte, insbesondere um eine geringe, insbesondere einstellige Gradzahl, insbesondere im Bereich von 3 bis 10°C. So kann einer Überhitzung entgegengewirkt und/oder die in den Flüssigkeitskreislauf überführte Wärmemenge gesteigert werden, in dem die Luftströmung durch den Ventilator bewirkt und/oder verstärkt wird.

Mit besonderem Vorteil weist das System eine Steuerungsvorrichtung auf, wobei die Steuerungsvorrichtung zur Steuerung der Wärmepumpe eingerichtet ist und/oder wird das Verfahren so geführt, die Wärmepumpe zu starten und/oder deren Leistung zu erhöhen, wenn entweder einer fünfte vorbestimmte Temperatur im Pufferspeicher unterschritten wird, wobei mindestens eine sechste vorbestimmte Temperatur der erwärmten Luft, des Flüssigkeitskreislaufs und/oder des Luft-Flüssigkeits-Wärmetauschers überschritten ist oder einer siebte vorbestimmte Temperatur, niedriger als die fünfte, im Pufferspeicher unterschritten wird und die Wärmepumpe zu stoppen und/oder deren Leistung zu reduzieren, wenn entweder eine achte vorbestimmte Temperatur im Pufferspeicher überschritten wird, wobei mindestens eine neunte vorbestimmte Temperatur der erwärmten Luft, des Flüssigkeitskreislaufs und/oder des Luft-Flüssigkeits-Wärmetauschers nicht überschritten ist oder einer zehnte vorbestimmte Temperatur, im Pufferspeicher überschritten wird.

Dabei können die vorbestimmten Temperaturen absolut oder relativ auch zu variablen Temperaturen, beispielsweise als Differenz zu einer anderen Temperatur, beispielsweise des Kältemittelkreislaufs, des Pufferspeichers und/oder der Vorlauftemperatur festgelegt sein. Insbesondere sind die fünfte und zehnte beziehungswiese die siebte und achte vorbestimmte Temperatur jeweils untereinander ähnlich aber insbesondere so gewählt, dass eine Hysterese erreicht wird, und/oder kurze Taktzeiten des Ein- und Ausschaltens möglichst vermieden werden. Insbesondere ist die achte höher als die siebte und/oder die zehnte höher als die fünfte, insbesondere um eine geringe, insbesondere einstellige Gradzahl, insbesondere im Bereich von 3 bis 10°C. Insbesondere ist die zehnte höher als die achte und die fünfte höher als die siebte und/oder die sechste identisch zur oder höher als die neunte.

So kann erreicht werden, dass bei ausreichender Wärme (über sechster vorbestimmter Temperatur) im Flüssigkeitskreislauf, des Luft-Flüssigkeits-Wärmetauschers und/oder im Hohlraum eine höhere Temperatur (fünfte vorbestimmte Temperatur), beispielsweise im Pufferspeicher, angestrebt wird als bei mangelnder Wärme (sechste Temperatur oder niedriger) im Flüssigkeitskreislauf, des Luft-Flüssigkeits-Wärmetauschers und/oder im Hohlraum, aber dennoch auch bei mangelnder Wärme im Flüssigkeitskreislauf, des Luft-Flüssigkeits-Wärmetauschers und/oder im Hohlraum eine ausreichende Temperatur (siebte vorbestimmte Temperatur), beispielsweise im Pufferspeicher, gehalten wird. Dies ermöglicht einen besonders effizienten Betrieb.

Die sechste Temperatur kann beispielsweise fest oder abhängig von dem Abstand der fünften und/oder siebte Temperatur von der aktuellen Temperatur im Pufferspeicher vorbestimmt sein.

Mit Vorteil weist das System mindestens einen Temperatursensor an/in der Sammelvorrichtung, dem Flüssigkeitskreislauf und/oder an dem Luft-Flüssigkeits-Wärmetauscher auf und/oder beinhaltet das Verfahren die kontinuierliche und/oder wiederholende Messung der Temperatur in der Sammelvorrichtung und/oder an/in Flüssigkeitskreislauf und/oder dem Luft-Flüssigkeits-Wärmetauscher.

Gelöst wird die Aufgabe auch durch ein System zur Reduzierung der Erwärmung eines Gebäudes, das bevorzugt Teil des oben geschilderten System ist, wobei das Gebäude ein Dach und/oder einer Fassade aufweisend eine Vielzahl von, insbesondere überlappenden, Abdeckelementen, insbesondere Schindeln, und einem dahinter befindlichen luftgefüllten Hohlraum, insbesondere begrenzt durch eine Unterspannbahn oder Gebäudewand, aufweist, wobei das System mindestens einen Ventilator aufweist, eingerichtet, Luft aus dem Hohlraum abzusaugen, dadurch gekennzeichnet, dass in mindestens 30% der Abdeckelemente und/oder zwischen einer Vielzahl von Paaren der Abdeckelemente, wobei die Vielzahl mindestens 30% der Anzahl der Abdeckelemente entspricht, Lufteintrittsöffnungen in den Hohlraum vorgesehen sind, die insbesondere über vertikale Erstreckung des Dachs oder der Fassade verteilt sind.

Gelöst wird die Aufgabe auch durch ein Verfahren, das bevorzugt Teil des oben beschriebenen Verfahrens ist, zur Reduzierung der Erwärmung eines Gebäudes, insbesondere dessen Innenräume, durch Sonneneinstrahlung, wobei das Gebäude ein Dach und/oder einer Fassade aufweisend eine Vielzahl von, insbesondere überlappenden und/oder aneinander angrenzenden, Abdeckelementen, insbesondere Schindeln, und einem dahinter befindlichen luftgefüllten Hohlraum, insbesondere begrenzt durch eine Holzverschalung, Unterspannbahn und/oder Gebäudewand, wobei mittels eines Ventilators Luft aus dem Hohlraum abgesaugt wird, dadurch gekennzeichnet, dass in mindestens 30% der Abdeckelemente und/oder zwischen einer Vielzahl von Paaren der Abdeckelemente, wobei die Vielzahl mindestens 30% der Anzahl der Abdeckelemente entspricht, Lufteintrittsöffnungen in den Hohlraum vorgesehen sind, durch die Luft eingesaugt wird, die insbesondere über vertikale Erstreckung des Dachs oder der Fassade verteilt sind.

Bevorzugt weisen die Abdeckelemente Solarzellenmodule auf und/oder sind durch solche gebildet.

In Bezug auf die Lufteintrittsöffnungen gilt insbesondere zu den Eintrittsöffnungen ausgeführtes und umgekehrt.

Weitere Vorteile und Ausgestaltungen sollen im Folgenden rein exemplarisch und nicht beschränkend anhand der nachfolgenden rein schematischen Figuren erläutert werden. Dabei zeigen:
- Fig. 1a: schematische Darstellung eines Dachs,
- Fig. 1b: schematische Darstellung eines Dachs,
- Fig. 2: Schnitt durch ein Dach mit erfindungsgemäßem System,
- Fign. 3 - 5: Schnitte durch einen Wärmetauscher und ein Sammelrohr,
- Fign. 6 - 8: Details eines Wärmetauschers und
- Fig. 9: einen Querschnitt durch ein Sichtschutzelement und
- Fig. 10: einen Querschnitt durch ein Sichtschutzelement und
- Fig. 11: einen Längsschnitt durch das Sichtschutzelement der Fig. 10 und
- Fig. 12: einen Querschnitt durch ein Haus mit Dach mit Kassette.

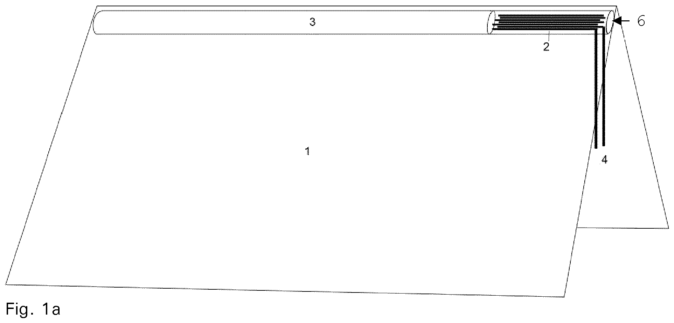

Fig. 1a zeigt ein Dach 1 mit einem Firstrohr 3 und einem darin angeordneten Luft-Flüssigkeits-Wärmetauscher 2 sowie einer endständigen Öffnung des Firstrohrs, dass im Bereich des Wärmetauschers nicht dargestellt ist, sowie einen Teil des Flüssigkeitskreislaufes 4, zu dem der Luft-Flüssigkeits-Wärmetauscher 2 gehört.

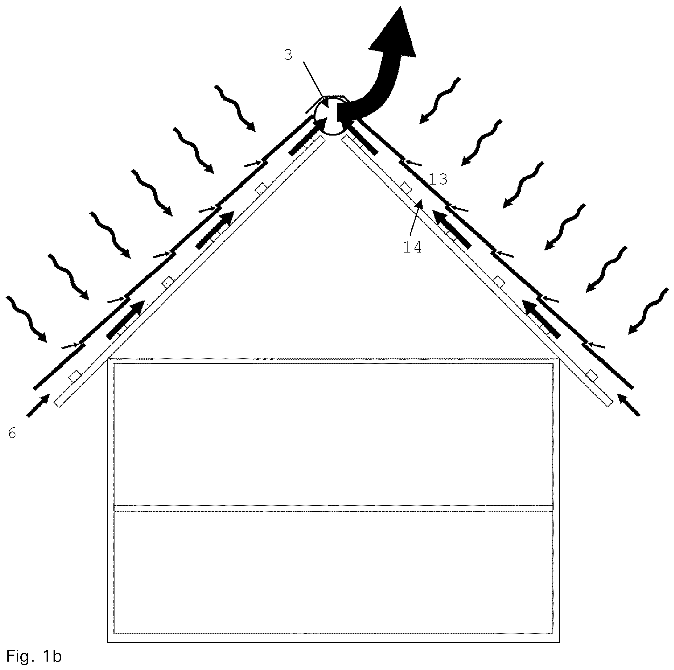

Fig. 1b zeigt dieses Dach 1 unter Darstellung anderer Aspekte. Zu erkennen sind Solarzellenmodule 13, die als Solarschindeln ausgeführt sind und der sich ergebene Hohlraum 14 im Bereich der Dachlattung. An der Traufe sind Lufteintrittsöffnungen 6 vorgesehen mit einem Firstrohr 3 und einem darin angeordneten Luft-Flüssigkeits-Wärmetauscher, nicht dargestellt, sowie einer endständigen Öffnung des Firstrohrs. Die daraus austretende Luft ist durch einen Pfeil nach oben verdeutlicht. Ebenfalls veranschaulicht sind die Lufteintrittsöffnungen zwischen den Solarschindeln, kenntlich gemacht durch kleine Pfeile, die den Lufteintritt verdeutlichen.

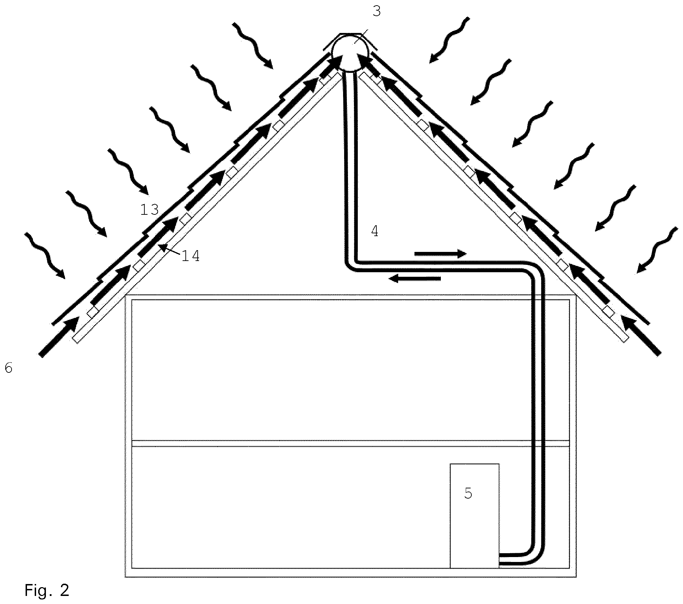

Diese Anordnung ist auch in der Fig. 2 dargestellt, in der der Luft-Flüssigkeitswärmetauscher jedoch ebenfalls nicht dargestellt ist. Zu erkennen ist der sich unter den Solarzellenmodulen 13, die als Solarschindeln ausgeführt sind, ergebene Hohlraum 14 im Bereich der Dachlattung. An der Traufe sind Lufteintrittsöffnungen 6 vorgesehen.

Die Sonneneinstrahlung erwärmt die Luft im Hohlraum, die thermisch bedingt und/oder durch einen Ventilator im Firstrohr getrieben aufsteigt und die, im Sammelrohr 3 im First gesammelt, am Luft-Flüssigkeits-Wärmetauscher vorbei geleitet wird und so die Flüssigkeit im Flüssigkeitskreislauf 4 erwärmt. Der Flüssigkeitskreislauf 4 transportiert die Wärme mittels einer Pumpe zur Wärmepumpe 5.

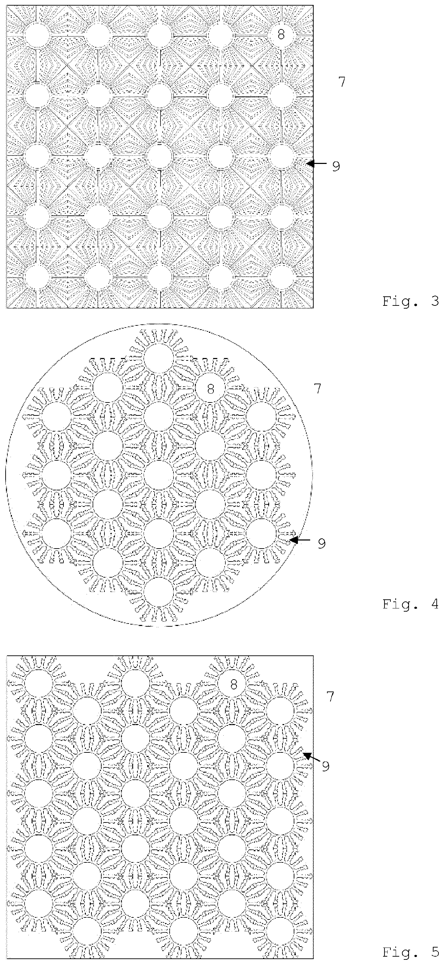

Fig. 3 bis 5 zeigen Details eines Luft-Flüssigkeits-Wärmetauschers jeweils in einem Querschnitt. Zu erkennen sind Rohre 8 des Flüssigkeitskreislaufs, die Teil des Luft-Flüssigkeits-Wärmetauschers sind. Diese sind in zwei Richtungen jeweils nebeneinander parallel angeordnet und weisen jeweils nach außen, radial oder näherungsweise radial, verlaufende Lamellen 9 auf. An diesen strömt die erwärmte Luft vorbei und kann ihre Wärmeenergie teilweise über die Lamellen und das Rohr an die Flüssigkeit abgeben. Die Lamellen benachbarter Rohre bilden Luftkanäle aus und stellen Wärmebrücken zwischen den Rohren her. Die Rohre mit Ihren Lamellen sind so angeordnet und ausgebildet, dass sie ein sie umschließendes Sammelrohr 7 zum großen Teil ausfüllen. Durch das Sammelrohr strömt die erwärmte Luft. Die Rohre und Luftkanäle sind in Strömungsrichtung angeordnet und so kann die Luft mit möglichst geringem Widerstand an einer möglichst großen Fläche vorbeiströmen und Wärmeenergie abgeben.

Zu erkennen ist auch, dass die Lamellen jedes Rohres in Figur 3 eine quadratische Außenkontur aufweisen, während in den Figuren 4 und 5 im Querschnitt sechseckige Lamellenanordnungen um je ein Rohr zu erkennen sind. Gemeinsam bilden sie eine wabenförmige Struktur aus.

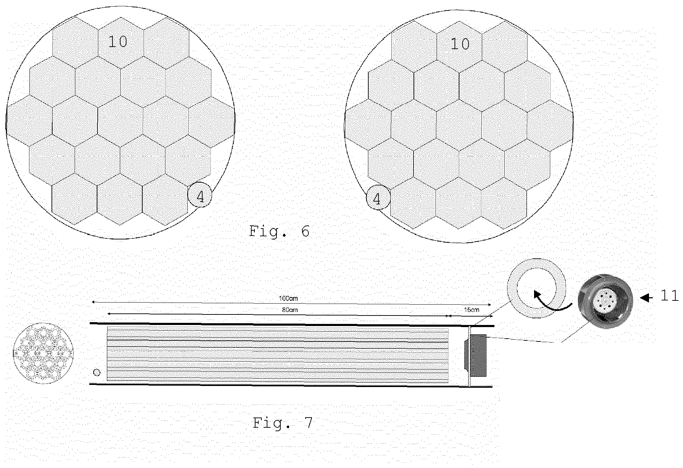

Figur 6 zeigt besonderes schematisch eine solche wabenartige Anordnung von Rohren mit Lamellen 10 in einem Sammelrohr von beiden Stirnseiten. Zu erkennen sind auch Zu- und Ableitungen, die Teil des Flüssigkeitskreislaufs 4 sind.

Figur 7 zeigt einen Luft-Wärmetauscher in einem Sammelrohr mit einem Ventilator 11. Links ist ein Querschnitt wie in Figur 4 gezeigt, in der Mitte sieht man einen Längsschnitt durch das Sammelrohr mit dem darin angeordneten Wärmetauscher und rechts davon einem Ventilator. Dieser ist rechts daneben noch einmal dargestellt.

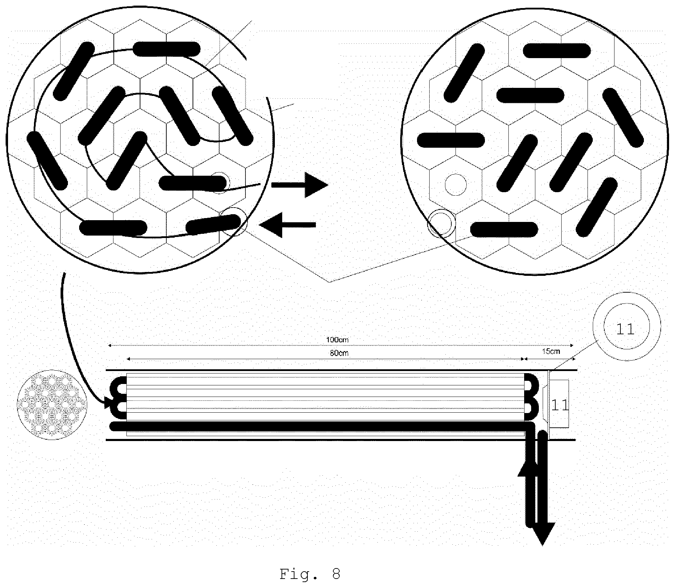

Figur 8 verdeutlicht eine Möglichkeit der Flüssigkeitsführung durch den Wärmetauscher. Die Verbindung der parallelen Rohre ist auf der linken Stirnseite links oben dargestellt, und auf der rechten, rechts oben dargestellt. In der Darstellung links oben ist zu erkennen, dass zunächst ein Zuführungsrohr (rechts unten und ohne Lamellen) die Flüssigkeit in die Ebene der Stirnseite führt und dann in ein erstes Rohr des Wärmetauschers überführt. Danach wird das Wasser durch einen Bogen auf der anderen rechten Stirnseite (fett dargestellt) wieder umgelenkt und durch ein weiteres Rohr des Wärmetauschers auf die linke Stirnseite geführt usw.. Die Führung des Wassers ist in der Projektion auf die linke Stirnfläche näherungsweise durch eine dünne Linie dargestellt. Die Pfeile verdeutlichen die Zu- und Abführung der Flüssigkeit und zu erkennen ist in der unteren Schnittdarstellung auch der rechts der rechten Stirnseite angeordnete Ventilator 11, der Luft von links ansaugt und nach rechts, beispielswiese durch die Luftaustrittsöffnung, abgibt.

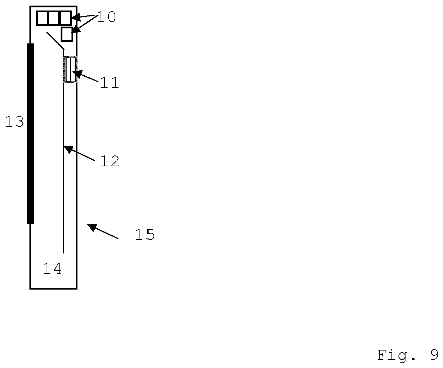

Figur 9 zeigt ein Fassadenelement im Querschnitt. Zu erkennen ist ein Hohlraum 14 hinter einem Solarzellenmodul 13. Im oberen Bereich des Hohlraums ist ein Luft-Flüssigkeits-Wärmetaucher mit Rohren mit Lamellen 10 gezeigt. Zudem sind ein Luftleitblech 12 und ein Ventilator 11 zu erkennen. Durch Sonneneinstrahlung auf die linke Fläche inklusive des Solarzellenmoduls wird die Luft im Hohlraum 14 erwärmt und steigt die Luft auf. Am Luft-Flüssigkeits-Wärmetauscher kühlt die Luft ab und fällt wieder nach unten. Das Luftleitblech 12 reduziert die Vermischung von wärmerer und abgekühlter Luft. Der Ventilator 11 kann die Strömung weiter verstärken.

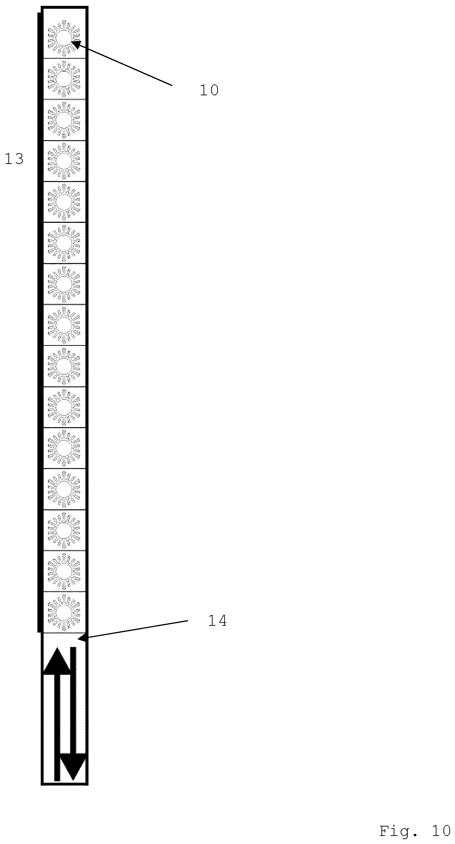

Figur 10 zeigt ein anders ausgebildetes Fassadenelement im Querschnitt. Zu erkennen ist ein Hohlraum 14 hinter einem Solarzellenmodul 13. Im Hohlraum ist, abgesehen vom untern Bereich, ein Luft-Flüssigkeits-Wärmetaucher mit Rohren mit Lamellen 10 gezeigt. Durch Sonneneinstrahlung auf die linke Fläche inklusive des Solarzellenmoduls wird die Luft im Hohlraum 14 erwärmt und steigt die Luft auf. Am Luft-Flüssigkeits-Wärmetauscher kühlt die Luft ab und fällt wieder nach unten. Die Zu- und Abführung der Flüssigkeit sind durch Pfeile veranschaulicht.

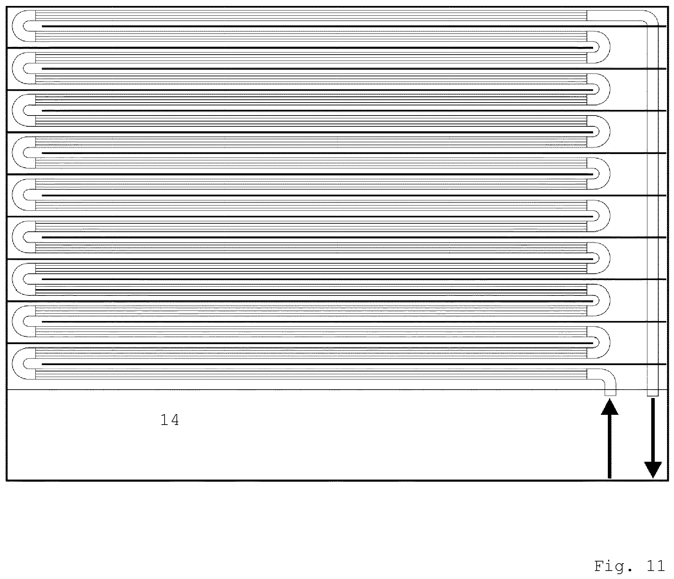

Fig. 11 zeigt einen Längsschnitt durch das Fassadenelement der Fig. 10. Zu erkennen ist die Führung der Flüssigkeit durch den Wärmetauscher.

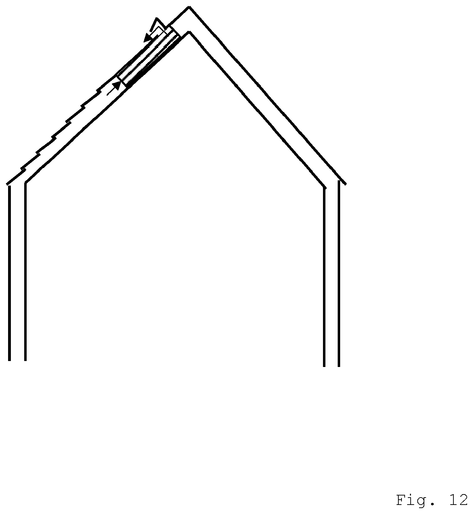

Fig. 12 zeigt einen Querschnitt durch ein Haus mit innerer und äußerer Gebäudehülle, wobei die äußere Gebäudehülle auf der linken Seite im Bereich des unteren Dachs durch überlappend verlegte Solarzigel mit dazwischen liegenden Lufteintrittsspalten ausgebildet ist und im darüber liegenden Abschnitt eine Kassette mit darin befindlichem Luft-Flüssigkeitswärmetaucher so angeordnet ist, dass diese einen teil der äußeren Gebäudehülle, hier der äußeren Dachhaut, bildet, aber selbst außerhalb der inneren Gebäudehülle liegt. Die Kassette (schraffiert) weist im unteren Bereich eine Lufteintrittsöffnung auf (durch einen Pfeil gekennzeichnet). Auf der die Dachhaut mit ausbildenen Seite ist eine Luftaustrittsöffnung angeordnet, die ein Luftleitblech zur Ausbildung eines Luftkanals und Umlenkung der der austretenden Luft (ebenfalls durch einen Pfeil gekennzeichnet angeordnet. Lediglich die (nicht dargestellten) Leitungen für den den Wärmetauscher durchströmenden Flüssigkeitskreislaufs durchdringen hier die innere Dachhaut.

### Bezugszeichenliste

- 1: Dach
- 2: Luft-Flüssigkeits-Wärmetauscher
- 3: Firstrohr
- 4: Flüssigkeitskreislauf
- 5: Wärmepumpe
- 6: Eintrittsöffnung
- 7: Sammelrohr
- 8: Rohr
- 9: Lamelle
- 10: Rohr mit Lamellen
- 11: Ventilator
- 12: Leitblech
- 13: Solarzellenmodul
- 14: Hohlraum
- 15: Sichtschutzelement

## Patentansprüche

1. System zur Erzeugung von Strom und Wärme mittels Sonnenstrahlung, wobei mindestens ein Solarzellenmodul (13), zusammen mit mindestens einem weiteren Element einen Hohlraum (14) auf der Rückseite des mindestens einen Solarzellenmodul ausbildet, wobei in dem Hohlraum Luft angeordnet ist und wobei das System so eingerichtet ist, dass auf das mindestens eine Solarzellenmodul auftreffende Sonnenstrahlung die Luft im Hohlraum erwärmt und wobei das System eingerichtet ist, die im Hohlraum erwärmte Luft in Kontakt mit einem Luft-Flüssigkeits-Wärmetauscher (2) zu bringen, wobei der Luft-Flüssigkeits-Wärmetauscher im First eines Dachs, insbesondere Steildachs, und/oder im oberen Bereich eines luftgefüllten und zur Erwärmung durch Sonnenstrahlung, insbesondere unter einer äußerem Dachhaut, ausgebildeten Hohlraums angeordnet ist und wobei der Luft-Flüssigkeits-Wärmetauscher Bestandteil einer Wasserleitung ist und eingerichtet und/oder angeordnet ist, Wasser in der Wasserleitung zu erwärmen, wobei die Wasserleitung eingerichtet ist zur Zuführung von erwärmtem Trink- und/oder Brauchwasser zu einer Zapfstelle und/der wobei der Luft-Flüssigkeits-Wärmetauscher Bestandteil eines Flüssigkeitskreislaufs (4) ist, wobei der Flüssigkeitskreislaufs eingerichtet und/oder angeordnet ist zur Erwärmung eins Kältemittelkreislaufs, insbesondere einer Wärmepumpe (5) und/oder zur Erwärmung eines Verdampfers, und/oder zur Erwärmung eines Pufferspeichers und/oder Pools.
1. System nach Anspruch 1, wobei der Flüssigkeitskreislaufs ein Flüssigkeitskreislauf ohne Kompressor ist und/oder der Flüssigkeitskreislauf kein Kältemittelkreislauf ist und/oder ein Flüssigkeitskreislaufs ohne Entspannungsvorrichtung ist und/oder wobei die Flüssigkeit des Flüssigkeitskreislaufs bei Standardbedingungen einen Siedepunkt über 50°C, insbesondere über 80°C, aufweist und/oder der Flüssigkeitskreislauf ein Flüssigkeitskreislaufs mit einem Druck unter 3 bar, insbesondere unter 2 bar ist und/oder die Flüssigkeit Frostschutzmittel aufweist und/oder der Flüssigkeitskreislauf ein Flüssigkeitskreislaufs abgesehen von einer darin angeordneten Pumpe einer mit Querschnittvariation unter 20% des maximalen Querschnitts ist und/oder einer mit konstantem Querschnitt ist und/oder der Flüssigkeitskreislauf ein Flüssigkeitskreislaufs mit Pumpe ist und/oder die Flüssigkeit durch Wasser und Zuschläge gebildet wird.

2. System nach einem der vorstehenden Ansprüche, wobei im und/oder oberhalb des Hohlraums eine Sammelvorrichtung, insbesondere ein Sammelrohr, für Luft aus dem Hohlraum angeordnet ist und die Sammelvorrichtung eingerichtet ist, die gesammelte Luft dem Luft-Flüssigkeits-Wärmetauscher zuzuführen und/oder ein Ventilator vorgesehen ist, eingerichtet und angeordnet die erwärmte und/oder gesammelte Luft dem Luft-Flüssigkeits-Wärmetauscher zuzuführen.

3. System nach einem der vorstehenden Ansprüche, wobei der weitere Wärmetauscher des Flüssigkeitskreislaufs auch Teil eines Wasser- oder Kältemittelkreislaufs einer Wärmepumpe ist, wobei das System insbesondere eingerichtet ist die durch die Wärmepumpe erzeugte Wärme einem oder dem Pufferspeicher zuzuführen.

4. System nach einem der vorstehenden Ansprüche, wobei der Luft-Flüssigkeits-Wärmetauscher gebildet ist durch mindestens ein Rohr, insbesondere eine Vielzahl von miteinander verbundenen Rohren, wobei das mindestens eine Rohr, insbesondere die Vielzahl, von Lamellen aus Metall umgeben ist/sind, wobei die Rohre insbesondere parallel zueinander angeordnet und/oder mit (Rund-)Bögen miteinander gekoppelt sind, wobei die Lamellen eines Rohrs im Querschnitt insbesondere eine Außenkontur aufweisen die rechteckig, rund, oval, quadratisch oder sechseckig ist und insbesondere die Lamellen der parallelen Rohre im Querschnitt gemeinsam eine Außenkontur bilden, die rechteckig und/oder quadratisch ist und/oder die Lamellen der parallelen Rohre im Querschnitt eine Wabenstruktur ausbilden, wobei das mindestes eine Rohr und/oder die parallelen Rohre und ihre Lamellen insbesondere im Hohlraum oder einem mit diesem strömungstechnisch verbundenen Sammelrohr angeordnet sind und insbesondere mit derselben Richtung der Längserstreckung wie das Sammelrohr angeordnet ist.

5. System nach einem der vorstehenden Ansprüche, wobei das mindestens eine Solarzellenmodul Eintrittsöffnungen aufweist und/oder ausbildet, durch die Luft in den Hohlraum einströmen kann und/oder das System, insbesondere die Sammelvorrichtung mindestens eine Austrittsöffnung aufweist, durch die Luft aus dem Hohlraum austreten kann, wobei bevorzugt die mindestens eine Austrittsöffnung höher liegt als eine und/oder alle Eintrittsöffnungen und/oder der Luft-Flüssigkeits-Wärmetauscher so angeordnet ist, dass Luft, die durch die Eintrittsöffnungen in den Hohlraum eingetreten ist vor dem Austritt durch die Austrittsöffnung an dem Luft-Flüssigkeits-Wärmetauscher vorbei strömt und wobei das System insbesondere so eingerichtet ist, dass durch die Erwärmung der Luft im Hohlraum eine Thermik bewirkt wird, die Luft durch die Eintrittsöffnungen ansaugt und aus der mindestens einen Austrittsöffnung austreten lässt und insbesondere aufweisend mindestens eine, insbesondere verschließbare, Schnelllüftungsöffnung, insbesondere endständig an der Sammelvorrichtung und/oder gegenüberliegend der Austrittsöffnung, zur Ermöglichung des Luftaustritts ohne Passage am Luft-Flüssigkeits-Wärmetauschers vorbei, insbesondere aufweisend einen Ventilator zur Förderung des Luftaustritts aus der Schnelllüftungsöffnung.

6. System nach einem der vorstehenden Ansprüche, wobei das Solarzellenmodul mindestens eine transparente Deckschicht, eine Solarzelle und mindestens eine dunkle, insbesondere schwarze, rote oder braune oder sonstig farbene, oder transparente Unterschicht aufweist und/oder eine Dicke im Bereich von 0,3 bis 5 cm, insbesondere über mindestens 70% seiner flächigen Erstreckung eine Dicke von weniger als 2 cm, insbesondere weniger als 1cm, aufweist.

7. System nach einem der vorstehenden Ansprüche, wobei das mindestens eine Solarzellenmodul Teil einer, insbesondere geneigten, Dachhaut ist und insbesondere oberhalb und/oder auf der Höhe des obersten Solarzellenmoduls die Sammelvorrichtung für im Hohlraum erwärmte Luft, insbesondere als Firstrohr, ausgebildet ist und insbesondere der Luft-Flüssigkeits-Wärmetauscher, insbesondere in einem endständigen, Abschnitt der Sammelvorrichtung und/oder zusammen mit einem Ventilator, angeordnet ist, wobei der den Luft-Flüssigkeits-Wärmetauscher aufweisende Teil der Sammelvorrichtung insbesondere eine Kondens- und/oder Abtauwasserabfuhrvorrichtung aufweist.

8. System nach dem vorstehenden Anspruch, wobei der Hohlraum zwischen Holzverschalung und/oder Unterspannbahn und Solarzellenmodul ausgebildet wird und insbesondere durch die Dachlattung aufgespannt wird und/oder wobei das mindestens eine Solarzellenmodul Teil einer Sichtschutzwand, eines Zauns und/oder einer Fassade ist.

9. System nach einem der vorstehenden Ansprüche, wobei das System eine Pumpe aufweist, die Teil des Flüssigkeitskreislaufs ist und/oder eine Wärmepumpe aufweist, deren Kältemittelkreislauf, insbesondere deren Verdampfer, mit dem Flüssigkeitskreislauf mittels des weiteren Wärmetauschers thermisch gekoppelt ist, und das System eingerichtet ist, die Wärmepumpe und/oder die Pumpe mittels durch das mindestens eine Solarzellenmodul erzeugtem Stroms zu betreiben.

10. System nach einem der vorstehenden Ansprüche aufweisend eine Steuerungsvorrichtung, wobei das System eine Pumpe, die Teil des Flüssigkeitskreislaufs ist und/oder eine Wärmepumpe, deren eins Kältemittelkreislaufs, insbesondere Verdampfer, mit dem Flüssigkeitskreislauf thermisch gekoppelt ist, und/oder einen Pufferspeicher zur Speicherung von Wärme und/oder einen Ventilator zur Förderung erwärmter Luft aufweist, wobei die Steuerungsvorrichtung zur Steuerung der Pumpe und/oder der Wärmepumpe eingerichtet ist und eingerichtet ist, die Pumpe so zu steuern, dass die Pumpe bei Übersteigen einer ersten vorbestimmten Temperatur der erwärmten Luft, des Luft-Flüssigkeits-Wärmetauschers und/oder des Flüssigkeitskreislaufs startet und/oder bei Unterschreiten einer zweiten vorbestimmten Temperatur der erwärmten Luft, des Luft-Flüssigkeits-Wärmetauschers und/oder des Flüssigkeitskreislaufs stoppt und/oder eingerichtet ist, den Ventilator so zu steuern, dass der Ventilator bei Übersteigen einer dritten vorbestimmten Temperatur der erwärmten Luft, des Luft-Flüssigkeits-Wärmetauschers und/oder einer Temperaturdifferenz zwischen der erwärmten Luft auf der einen Seite und des Flüssigkeitskreislaufs und/oder des Luft-Flüssigkeits-Wärmetauschers auf der anderen Seite startet und/oder bei Unterschreiten einer vierten vorbestimmten Temperatur der erwärmten Luft, des Luft-Flüssigkeits-Wärmetauschers und/oder einer Temperaturdifferenz zwischen der erwärmten Luft auf der einen Seite und des Flüssigkeitskreislaufs und/oder des Luft-Flüssigkeits-Wärmetauschers auf der anderen Seite stoppt und/oder
eingerichtet ist, die Wärmepumpe zu starten, wenn entweder einer fünfte vorbestimmte Temperatur im Pufferspeicher unterschritten wird, wobei eine sechste vorbestimmte Temperatur der erwärmten Luft, des Flüssigkeitskreislaufs und/oder des Luft-Flüssigkeits-Wärmetauschers überschritten ist oder einer siebte vorbestimmte Temperatur, niedriger als die fünfte, im Pufferspeicher unterschritten wird und die Wärmepumpe zu stoppen, wenn entweder eine achte vorbestimmte Temperatur im Pufferspeicher überschritten wird, wobei eine neunte vorbestimmte Temperatur der erwärmten Luft, des Flüssigkeitskreislaufs und/oder des Luft-Flüssigkeits-Wärmetauschers nicht überschritten ist oder einer zehnte vorbestimmte Temperatur, im Pufferspeicher überschritten wird.

11. System nach einem der vorstehenden Ansprüche aufweisend mindestens einen Temperatursensor in der Sammelvorrichtung und/oder an dem Luft-Flüssigkeits-Wärmetauscher.

12. First- und/oder Toprohr-Luft-Flüssigkeits-Wärmetauscher gebildet durch mindestens ein Rohr, insbesondere eine Vielzahl von miteinander verbundenen Rohren, zur Führung von Flüssigkeit durch den First-Luft-Flüssigkeits-Wärmetauscher zwecks Erwärmung der Flüssigkeit,
wobei das mindestens eine Rohr von mit ihm verbundenen Lamellen aus Metall umgeben ist, insbesondere die Rohre von mit ihnen verbundenen Lamellen aus Metall umgeben sind und wobei die Rohre parallel zueinander angeordnet und, insbesondere mittels Bögen, miteinander strömungstechnisch zur Führung von Flüssigkeit durch den First-Luft-Flüssigkeits-Wärmetauscher gekoppelt sind, und
wobei das Rohr, insbesondere die Rohre, und die Lamellen in einem Verlängerungs- und/oder Sammelrohr mit derselben Richtung der Längserstreckung wie das Verlängerungs- und/oder Sammelrohr und/oder in einer Kassette angeordnet sind, die mindestens eine Lufteintrittsöffnung, zur Verbindung mit und/oder Anordnung in einem Hohlraum, der durch Sonneneinstrahlung erwärmt wird und mindestens eine Luftaustrittsöffnung aufweist, die insbesondere so angeordnet ist, dass der Luftaustritt in einer anderen Ebene als der Lufteintritt erfolgt.

13. Verfahren zur gemeinsamen Erzeugung von elektrischem Strom und erwärmter Flüssigkeit mittels Sonneneinstrahlung auf eine Fläche mittels mindestens einem die Fläche ausbildenden Solarzellenmodul und, insbesondere gleichzeitiger, Erwärmung von Luft unterhalb des Solarzellenmoduls durch die Sonneneinstrahlung auf die Fläche und Überführen der in der Luft gespeicherten Wärmeenergie zumindest teilweise in eine Wasserleitung Flüssigkeit mittels eines Luft-Flüssigkeits-Wärmetauschers und/oder in einen Flüssigkeitskreislauf gefüllt mit Flüssigkeit mittels eines Luft-Flüssigkeits-Wärmetauschers, wobei insbesondere ein Wärmespeicher und/oder Pool geheizt und/oder ein Kältemittelkreislauf, insbesondere ein Verdampfer, einer Wärmepumpe , insbesondere mittels eines weiteren Wärmetauschers im Flüssigkeitskreislauf, geheizt wird.
